# FASCICULE DE BREVET EUROPEEN

(11) **EP 2 303 079 B1**
(45) Date de publication et mention de la délivrance du brevet: **30.11.2011**
(21) Numéro de dépôt: 09741977.4
(22) Date de dépôt: 22.04.2009
(51) Int. Cl.: A47J 43/046

(54) **MOUSSEUR POUR PREPARER DE LA MOUSSE A PARTIR D'UNE BOISSON COMPRENANT DU LAIT**
AUFSCHÄUMMASCHINE ZUR SCHAUMHERSTELLUNG AUS EINEM MILCHHALTIGEN GETRÄNK
FROTHING MACHINE FOR CREATING FROTH FROM A DRINK CONTAINING MILK

(30) Priorité: 07.05.2008 FR 0853044
(43) Date de publication de la demande: 06.04.2011
(73) Titulaire: COMPAGNIE MEDITERRANEENNE DES CAFES, 06510 Carros (FR)
(72) Inventeur: BLANC, Jean-Pierre, 06000 Nice (FR); GOERING, Alain, 06000 Nice (FR)
(74) Mandataire: Hautier, Nicolas
(86) Numéro de dépôt international: PCT/EP2009/054775
(87) Numéro de publication internationale: WO 2009/135759

(56) Documents cités:
- EP-A- 1 656 866
- EP-A- 1 808 111
- US-A- 4 162 855
- US-A1- 2007 165 485

## Description

L'invention concerne un mousseur pour préparer de la mousse à partir d'une boisson comprenant du lait.

L'invention trouvera notamment son application pour la préparation de mousse de lait servant à la réalisation de boissons comprenant du café et de la mousse de lait telles que des cappuccino, café latte, macchiato etc.

Habituellement, les mousseurs comprennent un récipient destiné à contenir la boisson à base de lait et dans lequel est logé un agitateur. L'agitateur est conformé pour être entraîné en rotation afin de fouetter la boisson à base de lait jusqu'à l'obtention de mousse. Le document EP-1656866 décrit un appareil pour la préparation de mousse.

Les mousseurs connus comportent des moyens de retenue afin de retenir l'agitateur en position de fonctionnement. Les moyens de retenue comprennent un organe solidaire du fond du récipient et sur lequel est monté en rotation libre l'agitateur.

Il est nécessaire de nettoyer le récipient après chaque utilisation. Or tout obstacle présent dans le récipient rend le nettoyage de ce dernier plus complexe. Par ailleurs, un axe rapporté de manière définitive sur une paroi du récipient forme un angle à la jonction entre cette même paroi et l'axe. Or, il s'avère particulièrement difficile d'empêcher l'accumulation de lait ou de boisson à base de lait dans les angles formés par deux parois contiguës. Ces angles constituent des zones particulièrement propices à une prolifération bactérienne.

En outre, ce problème de nettoyabilité est accentué lorsque les deux parois contiguës ne sont pas obtenues à partir d'une même pièce par emboutissage notamment mais sont juxtaposées par soudage ou collage par exemple. En effet, la juxtaposition de deux parois forme alors inévitablement une microrainure ou une microcavité dans laquelle il est particulièrement difficile d'extraire totalement la mousse ou la boisson à base de lait.

La présente invention vise à améliorer la nettoyabilité des mousseurs existants tout en permettant une utilisation pratique du mousseur.

A cet effet, on prévoit selon l'invention un mousseur pour préparer de la mousse à partir d'une boisson à base de lait comportant un récipient destiné à recevoir la boisson, un agitateur destiné à tourner à l'intérieur du récipient, un organe sur lequel est monté l'agitateur, des moyens de rétention de l'agitateur à l'intérieur du récipient, les moyens de rétention comportant au moins un aimant de rétention fixe par rapport au récipient en fonctionnement et agencés pour assurer magnétiquement la rétention de l'organe à l'intérieur du récipient.

Ainsi, l'agitateur est également retenu à l'intérieur du récipient. Tout risque de chute ou de retrait involontaire de l'agitateur est ainsi évité aussi bien lorsque l'agitateur tourne que lorsque le récipient est incliné pour verser la mousse.

En prévoyant une retenue magnétique de l'organe sur lequel est monté l'agitateur, l'invention permet d'éviter que cet organe ne soit lié de manière définitive au récipient. Ainsi, lorsque le récipient doit être lavé, l'agitateur et l'organe peuvent être retirés du récipient. L'accès à ce dernier est alors facilité. La nettoyabilité du mousseur est ainsi améliorée.

Par ailleurs, le mousseur selon l'invention permet d'éliminer la présence de microrainures ou de microcavités propices à la prolifération bactérienne à la jonction entre l'organe recevant l'agitateur et les parois du récipient.

Le mousseur selon l'invention pourra en outre présenter de manière facultative l'une quelconque des caractéristiques suivantes:
- le mousseur comprend un organe qui est un arbre ou un plot sur lequel l'agitateur est solidaire en rotation
- l'aimant de rétention est disposé à l'extérieur du récipient et dans lequel l'organe comporte en partie au moins un matériau ferromagnétique ou un second aimant de rétention, l'aimant de rétention et l'organe étant agencés de sorte que l'attraction magnétique que l'aimant de rétention exerce sur l'organe assure la rétention de l'agitateur à l'intérieur du récipient.
- l'organe comprend un axe sur lequel l'agitateur est monté en rotation libre.
- l'un parmi l'axe et le récipient est solidaire de l'aimant de rétention, l'autre comprenant au moins en partie ou étant solidaire d'un élément complémentaire de rétention, l'aimant de rétention et l'élément complémentaire de rétention étant agencés de sorte que leur attraction mutuelle assure la rétention de l'agitateur à l'intérieur du récipient.
- l'élément complémentaire de retenue comprend une pièce ferromagnétique.
- l'élément complémentaire de retenue comprend au moins un second aimant de rétention.
- les moyens d'entraînement comportent au moins un aimant permanent moteur, dans lequel l'aimant de rétention est solidaire du récipient et le second aimant de rétention est solidaire de l'axe et dans lequel au moins un aimant moteur et l'aimant de rétention sont disposés de sorte à assurer un auto centrage de l'axe sur l'aimant de rétention.
- les aimants moteur sont agencés pour tourner autour de l'aimant de rétention dans lequel les aimants moteur, l'élément l'aimant de rétention et le second aimant de rétention sont disposés de sorte que l'orientation de leurs pôles soit sensiblement parallèle à la direction autour de laquelle l'agitateur est destiné à tourner.
- les aimants moteur présentent tous la même orientation magnétique et dans lequel l'aimant de rétention présente une orientation magnétique inverse de celle des aimants moteur.
- le récipient présente un fond sensiblement plat
- le mousseur comporte des moyens de retenue assurant la rétention amovible de l'agitateur sur l'axe.
- les moyens de retenue sont agencés de sorte que la surface de contact entre l'agitateur et l'axe soit ponctuelle.
- le dispositif comprend un boîtier à l'intérieur duquel sont logés les moyens d'entraînement, dans lequel le boîtier est solidaire du récipient et comprenant un socle de connexion amovible par rapport au boîtier et qui est destiné à être connecté à une source d'alimentation électrique de sorte qu'une coopération entre le boîtier et le socle assure une connexion électrique des moyens d'entraînement avec la source d'alimentation électrique.
- les moyens de retenue assurent une retenue amovible de secteur sur l'axe par clipsage.
- les moyens de retenue sont agencés pour assurer une rétention amovible de l'agitateur à l'intérieur du récipient.

D'autres caractéristiques, buts et avantages apparaîtront à la lecture de la description qui suit et au regard des dessins annexés donnés à titre d'exemples non limitatifs et sur lesquels :
- la figure 1 est une vue en perspective et en coupe partielle d'un mousseur sur un exemple de réalisation de l'invention,
- la figure 2 est une vue en perspective et en coupe partielle du mousseur selon la figure 1.
- la figure 3 est une autre vue en perspective et en coupe partielle du mousseur selon la figure 1.
- la figure 4 est une vue en perspective d'une portion de l'agitateur selon l'invention.

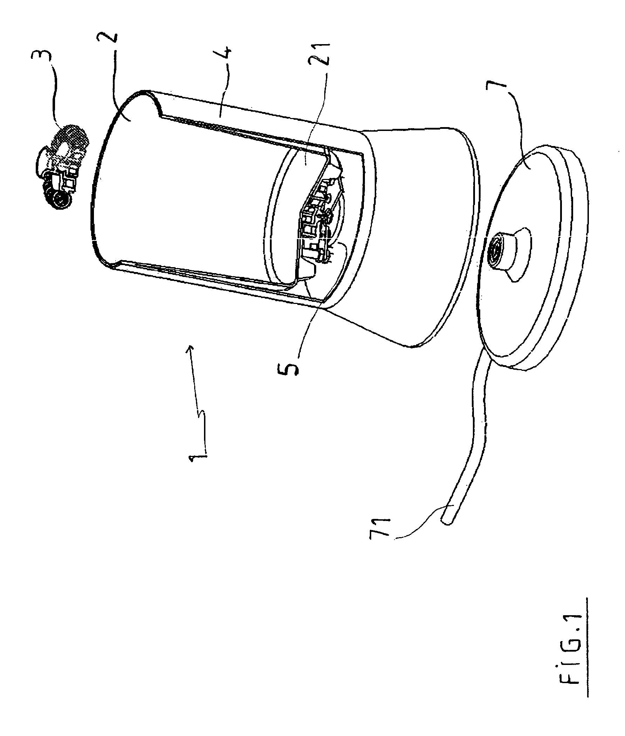

Un exemple de mousseur selon l'invention va maintenant être décrit en référence aux figures 1 à 4.

Le mousseur 1 comprend un récipient 2 destiné à recevoir la boisson à base de lait et un agitateur 3 adapté pour tourner à l'intérieur du récipient 2 afin de battre et de fouetter la boisson en vue d'obtenir de la mousse. L'agitateur 3 tourne autour d'une direction de rotation. Il est monté sur un organe 6. Cet organe 6 s'étend principalement selon la direction de rotation. Le mousseur 1 comprend des moyens d'entraînement 5 ayant pour fonction d'entraîner magnétiquement l'agitateur 3 en rotation. A cet effet, les moyens d'entraînement 5 comprennent un moteur 53 présentant un arbre 54 de sortie couplé en rotation avec un disque 52 muni d'aimants permanents désignés par la suite aimants moteur 51.

L'agitateur 3 comprend des aimants désignés par la suite aimants suiveur 31. Dans une variante de réalisation, tout ou partie des aimants suiveur 31 sont substitués par des éléments ferromagnétiques.

Les moyens d'entraînement 5 sont situés à l'extérieur du récipient 2. Le mousseur 1 est agencé de sorte que les aimants moteur 51 et suiveurs 31 soient disposés en regard. Ainsi, une paroi du récipient 2 est disposée à l'intérieur de l'entrefer défini par un couple d'aimants formé par un aimant moteur 51 et par un aimant suiveur 31. De cette manière, aucun arbre d'entraînement ne traverse le récipient 2, ce qui supprime par conséquent de nombreuses contraintes d'étanchéité.

Le mousseur 1 comprend un boîtier à l'intérieur duquel sont logés les moyens d'entraînement 5. Avantageusement, le boîtier et le récipient 2 son solidaires. Le récipient 2 peut être logé dans le boîtier ou être juxtaposé à ce dernier.

De préférence, le mousseur 1 comprend des moyens de chauffage 8 destinés à élever la température de la boisson à base de lait et à maintenir la mousse à une température donnée. Les moyens de chauffage 8 sont disposés de préférence dans le boîtier.

Les moyens de chauffage permettent un échauffement contrôlé de la boisson à base de lait pendant l'opération de fouettage, ce qui accélère l'apparition de la mousse de lait et en augmente la densité de cette dernière.

Le mousseur 1, 100 comprend des moyens d'alimentation électrique.

Avantageusement, ces moyens d'alimentation électrique comprennent un socle d'alimentation 7 connectable à une source d'alimentation tel que le secteur. Les moyens d'alimentation électrique sont conformés de sorte qu'une coopération mécanique entre le socle 7 et le boîtier 4 permet une connexion électrique des moyens d'entraînement 5 et des éventuels moyens de chauffage 8.

Le bloc formé par le récipient 2 et le boîtier 4 constitue ainsi un ensemble sans fil lorsqu'il est désenclenché du socle 7.

Pour préparer de la mousse, le bloc est disposé sur le socle 7 puis pour verser la mousse il est retiré du socle 7. Le bloc peut ainsi être manipulé librement ce qui facilité l'utilisation du mousseur 1, 100.

Dans une variante de réalisation le bloc est également déconnectable de tout câble d'alimentation électrique. Le mousseur 1, 100 ne comporte pas de socle 7 mais présente alors une fiche destinée à coopérer avec un câble d'alimentation électrique. Cette fiche peut être disposée au niveau du boîtier 4 notamment.

Dans une autre variante de réalisation, le mousseur 1, 100 est monobloc et le boîtier 4 est connecté de manière inamovible à un câble d'alimentation électrique.

Dans d'autres variantes de réalisation les moyens d'entraînement 5 et éventuellement les moyens de chauffage sont alimentés par induction ou par des accumulateurs.

De manière avantageuse, l'agitateur 3 et le disque 52 d'entraînement comportent chacun trois aimants permanents répartis à 120°. On peut également prévoir que l'agitateur comprenne deux aimants 51.

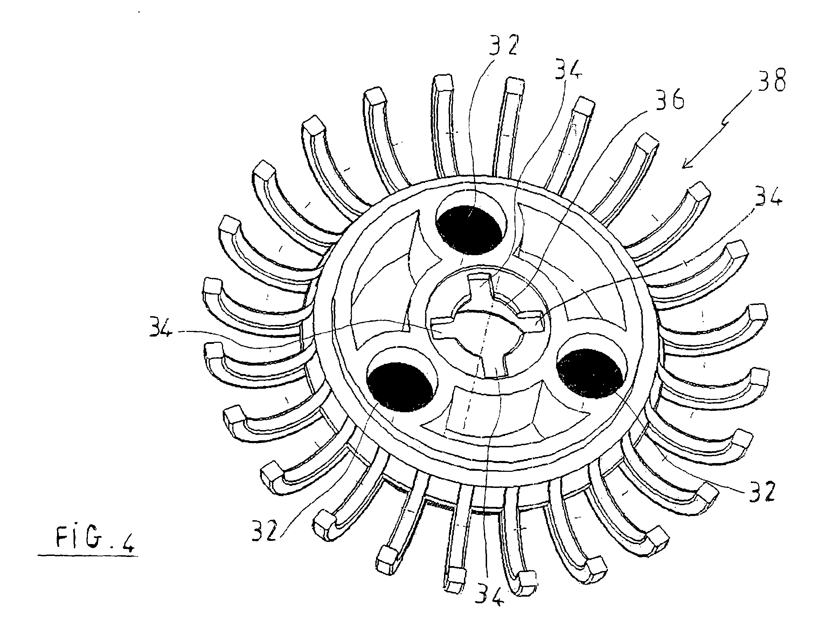

L'agitateur 3 est formé de deux demi-coques dont l'assemblage définit des logements 32 pour les aimants suiveur 31. Une demi-coque inférieure est illustrée en figure 4. Chaque demi-coque présente des demi-reliefs 33 qui, une fois l'agitateur 3 assemblé, définissent des reliefs 33 en forme d'anneaux répartis sur un cercle centré sur la direction de rotation ou en forme de spirale torique centrée sur la direction de rotation. Les reliefs 33 améliorent l'effet de fouettage de la boisson à base de lait et favorisent ainsi l'obtention de mousse.

Le mousseur 1 comprend des moyens de rétention destinés à assurer la retenue de l'agitateur 3 à l'intérieur du récipient 2. Ces moyens de rétention comportent au moins un aimant désigné aimant de rétention 91 dont la fonction est d'assurer la rétention à l'intérieur du récipient de l'organe 6 sur lequel est monté l'agitateur 3.

De préférence, l'élément de rétention est fixe par rapport au récipient 2 en fonctionnement.

Dans un premier mode de réalisation, l'aimant de rétention 91 est solidaire du récipient 2.

A cet effet, il peut être noyé dans la paroi du récipient ou il peut être rapporté à l'intérieur de ce dernier. De préférence, il est accolé magnétiquement ou par collage sur la paroi extérieure de ce dernier. Avantageusement, les moyens de rétention comprennent une pièce de rétention 90 à l'intérieur de laquelle l'aimant de rétention 91 est logé.

Avantageusement, l'aimant de rétention 91 est disposé sur la direction autour de laquelle l'agitateur 3 est destiné à tourner. De manière préférée, l'aimant de rétention 91 comporte plusieurs aimants de rétention centrés sur cette direction.

Dans ce premier mode de réalisation, les moyens de rétention comportent également un élément complémentaire de rétention solidaire de l'organe 6 et comportant au moins un aimant secondaire de rétention 61. L'aimant de rétention 91 et l'aimant secondaire de rétention 61 sont agencés de sorte à établir mutuellement un couplage magnétique apte à retenir à l'intérieur du récipient 2 l'organe 6 ainsi que l'agitateur monté sur l'organe 6. Ainsi, l'agitateur 3 et l'organe 6 ne peuvent s'échapper involontairement du récipient 2 lorsque l'agitateur 3 tourne ou lorsque le récipient 2 est incliné pour verser la mousse par exemple.

Par ailleurs, les moyens de rétention sont agencés de sorte que sous l'effet d'une traction volontaire de l'utilisateur, ce dernier peut éloigner l'aimant de rétention 91 et le aimant secondaire de rétention 61 de manière à supprimer l'accouplement magnétique. L'organe 6 et l'agitateur 3 ne sont alors plus retenus dans le récipient 2 et peuvent être extraits de ce dernier. Par la suite, le simple fait de rapprocher à nouveau l'organe 6 de l'aimant de rétention 91 permet de recréer l'accouplement magnétique et d'assurer la rétention de l'organe 6 dans le récipient 2.

Cette possibilité qu'offre l'invention de pouvoir retirer et repositionner aisément l'organe 6 et par conséquent l'agitateur 3 monté sur l'organe 6 s'avère particulièrement avantageuse en terme de nettoyabilité. En effet, il permet d'avoir un récipient dont le fond 21 est plat ou à tout le moins sensiblement continu et ceci même sur la paroi destinée à accueillir l'agitateur 3.

Par ailleurs, ces moyens de rétention permettent une retenue efficace. Ils permettent également une obtention aisée peu coûteuse du mousseur 1. En particulier, il ne nécessite pas d'effectuer une étape spécifique pour emboutir le récipient 2 ou rapporter dans celui-ci un axe par collage, soudage ou brasage.

Par ailleurs, les aimants des moyens de rétention sont disposés de sorte à assurer un auto centrage de l'organe 6 sur la direction autour de laquelle l'agitateur 3 est destiné à tourner.

A cet effet, l'aimant ou les aimants de rétention sont centrés sur cette direction. Par ailleurs, ils sont orientés de manière à ce que leurs pôles tournés au regard de l'agitateur présentent une polarité opposée à celle des pôles appartenant aux aimants moteur 51 et qui sont tournés au regard de l'agitateur 3.

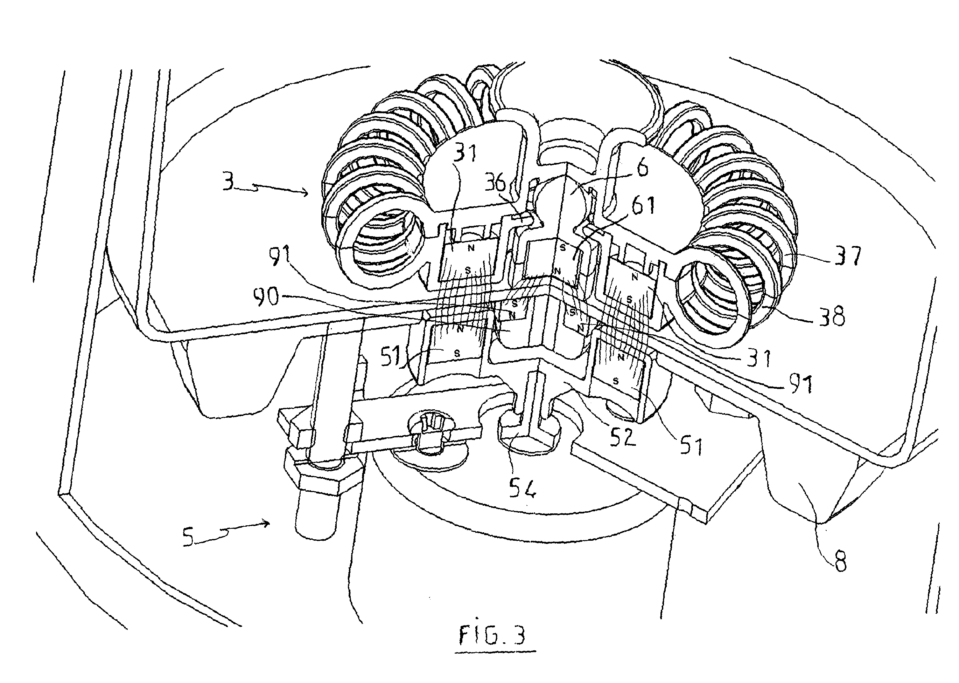

Ainsi, comme le fait apparaître l'exemple non limitatif illustré en figure 3, si les aimants moteur 51 présentent une polarité "N" (Nord) à l'agitateur, les aimants de rétention présentent quant à eux à l'agitateur une polarité S (Sud).

L'organe 6 lui est agencé de sorte que les pôles des seconds aimants de rétention qui sont placés au regard des aimants de rétention présentent une polarité (N) inverse de celle de pôles (S) des seconds aimants qui leur font face.

Par conséquent, les aimants moteur 51 auront tendance à repousser l'extrémité de l'organe 6 au contact du récipient 2. Les aimants de rétention auront quant à eux tendance à attirer cette même extrémité. Cet agencement particulier des moyens d'entraînement et des moyens de rétention favorise un auto centrage de l'agitateur 3 dans le récipient 2. En effet, il contribue à ramener l'organe 6 dans sa position d'équilibre centrée sur les aimants de rétention et par conséquent sur la direction de rotation.

La mise en position de l'agitateur 3 dans le récipient 2 est ainsi rendue plus facile et plus précise. Son maintien en position lors du fonctionnement est également rendu plus stable. La vitesse de rotation de l'agitateur 3 peut ainsi être significativement augmentée sans risque d'éjection de ce dernier sous l'effet de la force centrifuge.

Avantageusement, les aimants suiveur sont également disposés à favoriser cet auto centrage et cette stabilisation de l'organe 6. En effet, leurs pôles en regard de la paroi du récipient 2 recevant l'agitateur 3 présentent une polarité (S) opposée à celle des aimants moteur 51 (N) et identique à celle des aimants de rétention (S).

Sur l'exemple illustré en figure 3, l'agitateur comporte trois aimants suiveur, le disque des moyens d'entraînement comporte trois aimants moteur 51, les moyens de rétention comportent trois aimants de rétention répartis à 120° et l'organe 6 comprend un aimant secondaire de rétention 61. Cet exemple n'est évidemment pas limitatif et le nombre ainsi que la disposition des aimants peuvent être modifiés sans sortir du cadre de l'invention.

Selon une première variante de ce premier mode de réalisation, l'agitateur 3 est solidaire en rotation de l'organe 6. Ainsi, l'organe 6 fait alors office d'arbre 6 d'entraînement de l'agitateur. L'arbre 6 est également entraîné en rotation sous l'effet de l'accouplement magnétique entre les moyens d'entraînement 5 et l'agitateur 3. La zone de contact entre l'arbre 6 et le récipient 2 constitue ainsi la zone de frottements. On prévoit de préférence des matériaux, des états de surface et/ou des dimensions de surface appropriées pour cette zone de friction.

Dans une telle variante, on peut prévoir que l'agitateur 3 et l'arbre 6 ne forme qu'une seule pièce monobloc. Une telle variante permet de réduire les coûts de fabrication et d'assemblage. Dans cette variante, on peut également prévoir que l'arbre 6 présente au regard de l'agitateur 3 une faible dimension selon la direction de rotation. Ainsi l'organe 6 peut se limiter à constituer une simple protubérance ou un simple plot central ayant pour fonction d'assurer le contact entre le centre de l'agitateur et le récipient 2 afin d'éviter que l'ensemble de la surface de l'agitateur en regard du récipient ne frotte sur ce dernier.

Selon une deuxième variante de ce premier mode de réalisation, l'agitateur 3 est monté en rotation libre autour de l'organe 6. Ce dernier fait alors office d'axe. Cette variante est illustrée sur les figures 1 à 3. L'agitateur 3 est entraîné en rotation alors que l'axe demeure fixe. Cependant, dans cette variante, en fonction de l'agencement de la liaison entre l'agitateur 3 et l'axe et en fonction de l'intensité des moyens de rétention, on pourra observer une mise en rotation de l'axe autour de la direction de rotation. Tant que l'agitateur 3 demeure centré autour cette direction, cette mise en rotation ne nuit pas au bon fonctionnement du mousseur 1.

Selon cette variante, on prévoit des moyens de retenue agencés pour permettre la retenue de l'agitateur sur l'axe. Ces moyens de retenue sont détaillés par la suite.

Dans une deuxième mode de réalisation, les moyens de rétention comprennent un aimant de rétention 91 solidaire du récipient 2 et l'organe 6 ne comprend pas d'aimant secondaire de rétention 61. L'organe 6 est alors constitué en tout ou partie par une pièce en un matériau ferromagnétique. L'aimant de rétention 91 est agencé pour exercer une force d'attraction suffisamment importante sur cette pièce ferromagnétique afin de retenir l'organe 6 à l'intérieur du récipient 2. Avantageusement, ce deuxième mode de réalisation est d'une grande simplicité de fabrication.

Selon une première variante de ce deuxième mode de réalisation, l'agitateur 3 est solidaire de l'organe 6 en rotation. Ce dernier fait alors office d'arbre 6 d'entraînement pour l'agitateur 3. Les remarques faites à propos de la première variante du premier mode de réalisation s'appliquent à cette première variante du deuxième mode de réalisation.

Selon une deuxième variante de ce deuxième mode de réalisation, l'agitateur 3 est monté en rotation libre autour de l'organe 6. Ce dernier fait alors office d'axe. Les remarques faites à propos de la deuxième variante du premier mode de réalisation s'appliquent à cette deuxième variante du deuxième mode de réalisation.

Dans un troisième mode de réalisation, les moyens de rétention comprennent un aimant de rétention 91 solidaire de l'organe 6 et le récipient ne comprend pas d'aimant secondaire de rétention 61. On prévoit à l'extrémité de l'organe 6 destiné à être au contact du récipient 2, ou à proximité de cette extrémité, un aimant permanent. Le récipient 2 est quant à lui formé dans ou accolé à une pièce dans un matériau ferromagnétique. L'aimant de rétention 91 est agencé pour exercer une force d'attraction suffisamment importante sur le récipient en matériau ferromagnétique ou sur la pièce en matériau ferromagnétique afin de retenir l'organe 6 à l'intérieur du récipient 2.

Ce troisième mode de réalisation est également simple à fabriquer notamment puisque le récipient ne nécessite ni étape de formation ou de report de l'organe 6, ni incorporation d'un aimant permanent.

Avantageusement, dans une variante de ce troisième mode de réalisation, l'agitateur 3 est monté en rotation sur l'organe 6 faisant ainsi office d'axe.

Dans une autre variante de réalisation, l'agitateur 3 est soudé à l'organe 6 qui fait alors office d'arbre.

Les remarques faites à propos des variantes dans lesquelles l'organe 6 fait office d'axe et d'arbre s'appliquent à ces deux variantes respectivement.

Pour chacun des modes de réalisation décrits précédemment, on peut prévoir plusieurs agencements pour l'accouplement magnétique entre les aimants moteur et suiveur et pour les moyens d'entraînement.

Ainsi, on pourra prévoir selon un premier agencement des moyens d'entraînement 5 que chaque couple formé par un aimant moteur 51 et un aimant suiveur 31 définit un accouplement magnétique et un entrefer à l'intérieur duquel les lignes de flux sont orientées de manière sensiblement colinéaires à la direction de rotation. Un exemple illustrant ce premier agencement est illustré sur les figures 1 à 3. Avec cet agencement, peut être disposé à distance de l'axe de rotation. Par conséquent, le moment disponible sur l'agitateur 3 peut être particulièrement important. Avantageusement, tous les aimants moteur 51 sont orientés de manière identique et tous les aimants suiveur sont orientés de manière identique. Cette orientation des pôles des aimants moteur 51 et suiveur 31 est illustré également sur les exemples des figures 1 à 3.

Ce premier agencement permet d'avoir un récipient 2 dont le fond 21 est sensiblement plat et pour le moins continu. Il permet également de limiter substantiellement l'encombrement des moyens d'entraînement 5. Ces derniers peuvent notamment être confinés sous le fond 21 plat du récipient.

On pourra prévoir selon un deuxième agencement des moyens d'entraînement 5 que chaque couple formé par un aimant moteur 51 et un aimant suiveur 31 définit un accouplement magnétique et un entrefer à l'intérieur duquel les lignes de flux sont orientées de manière sensiblement perpendiculaires à la direction autour de laquelle l'agitateur (3) est destiné à tourner.

Pour chacun des modes de réalisation décris précédemment, on peut prévoir plusieurs agencements des moyens de retenue destinés à assurer la retenue de l'agitateur sur l'organe 6.

Selon un agencement des moyens de retenue, ces derniers comportent une forme sensiblement sphérique définissant l'extrémité libre de l'organe 6, c'est-à-dire l'extrémité qui n'est pas destinée à entrer au contact du récipient 2. Ils comprennent également une collerette 36 formée dans l'alésage de l'agitateur 3. Cette collerette 36 peut être obtenue par une réduction de diamètre ou par une lèvre de diamètre inférieur à celui de la sphère. Sous l'effet d'un emmanchement opéré par l'utilisateur, la déformation relative de la collerette 36 et/ou de la sphère provoque le passage de la collerette 36 au-delà de la sphère. En fonctionnement, l'agitateur 3 demeure ainsi maintenu par la sphère formant butée pour la collerette 36. Une fois la mousse préparée et versée, le retrait de l'agitateur 3 s'effectue et en appliquant un effort de traction sur l'agitateur 3 vers l'extrémité libre de l'organe 6. Sous l'effet de cet effort, la déformation relative de la collerette 36 par la sphère provoque le passage de la collerette 36 au-delà de la sphère ce qui libère l'agitateur 3.

De manière préférée, la collerette 36 présente une ou plusieurs échancrures 34 s'étendant radialement depuis l'intérieur vers l'extérieur de l'alésage. Les échancrures 34 sont dimensionnées et positionnées de sorte à favoriser une déformation élastique de la collerette 36 lorsque l'utilisateur insère l'agitateur 3 sur l'organe 6 ou le retire hors de l'organe 6. Ces échancrures 34 permettent ainsi un clipsage aisé de l'agitateur 3. L'agitateur 3 dont une portion est représentée en figure 5 comporte quatre échancrures 34.

L'organe 6 comporte également une gorge qui peut être formée par la jonction entre la sphère et une augmentation de section de l'organe 6. La coopération entre la gorge et l'agitateur 3 permet également d'éviter que ce dernier ne se retire de l'organe 6 involontairement lors de la préparation de la mousse ou lors du versement de cette dernière. A cet effet, comme expliqué précédemment, les moyens de retenue assurent une retenue efficace, simple et amovible par clipsage par exemple.

On peut aussi prévoir que la collerette 36 et la gorge fassent office de butée en translation le long de l'organe 6 dans les deux sens et définissent la surface de contact 35 lors du fonctionnement.

Dans une variante de ce mode de réalisation, les moyens de retenue comprennent un organe 6 présentant une gorge dans laquelle la collerette 36 est destinée à s'insérer. Les parois de la gorge forment alors chacune une butée en translation pour l'agitateur 3.

L'alésage présente une surface de contact 35 destinée à servir de surface d'appui et de frottement entre l'organe 6 et l'agitateur 3 lors du fonctionnement.

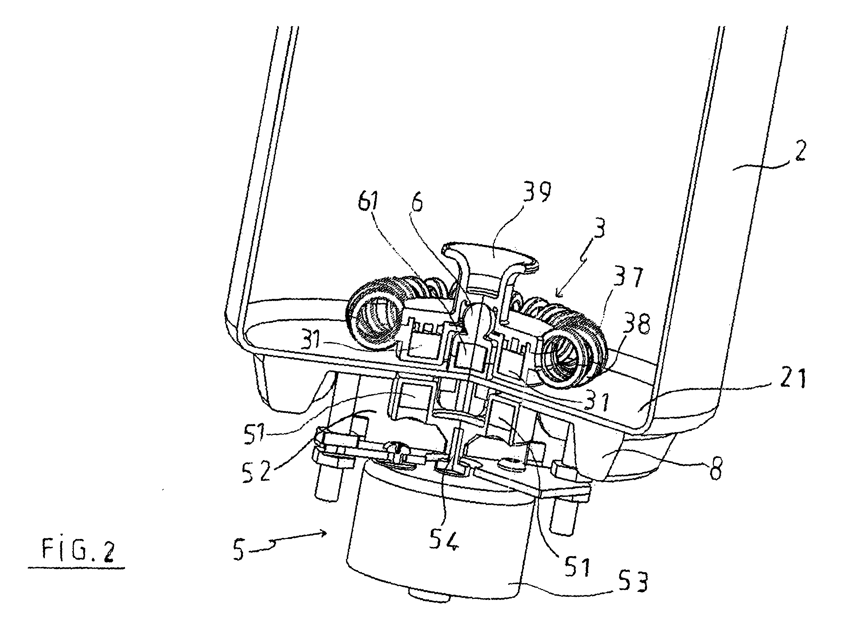

Dans l'exemple illustré en figures 2 et 3, l'extrémité de l'organe 6 est logée à l'intérieur de l'alésage et la surface d'appui présente une forme concave de rayon de courbure supérieur à celui de la sphère. Par conséquent, le contact entre l'organe 6 et la sphère est ponctuel. Cet agencement permet ainsi de limiter les frottements lors du fonctionnement.

En variante d'autres formes peuvent être envisagées. Ainsi, on peut prévoir que l'alésage comporte une forme plane et que l'organe 6 comporte une forme plane, obtuse ou conique. Par ailleurs, l'organe 6 peut comporter une forme plane ou convexe et le fond d'alésage peut comporter une forme sphérique ou conique.

Si l'on souhaite permettre à l'agitateur de tourner librement sur l'organe 6, on peut prévoir des moyens formant assurant une fonction de guidage en rotation pour l'agitateur. La coopération de la gorge et de la collerette peuvent par exemple assurer ce guidage.

Si l'on souhaite que l'agitateur soit solidaire en rotation de l'organe 6, on peut prévoir de former ces deux éléments dans une même pièce ou de disposer des moyens formant butée en rotation.

Avantageusement, l'invention prévoit de nombreux modes de réalisation permettant chacun d'améliorer la néttoyablilité du mousseur. Par ailleurs, ils sont simples à fabriquer. Ils permettent de conserver un encombrement limité. Le mousseur selon l'invention s'avère en outre particulièrement pratique d'utilisation tant lors de son assemblage en vue de préparer de la mousse, que lors de la préparation de la mousse ou que lors du versement de cette dernière ou encore que lors de son nettoyage.

### REFERENCES

- 1: Mousseur
- 2.: Récipient
- 21.: Fond du récipient
- 3.: Agitateur
- 31.: Aimant suiveur
- 32.: Logement
- 33.: Relief
- 34.: Echancrure
- 35: Surface de friction
- 36.: Collerette
- 37.: Partie supérieure
- 38.: Partie inférieure
- 39.: Zone de préhension
- 4.: Boîtier
- 5.: Moyens d'entraînement
- 51.: Aimant moteur
- 52.: Disque
- 53.: Moteur
- 54.: Arbre de sortie du moteur
- 6.: Organe
- 61.: Aimant secondaire de rétention
- 61: Sphère
- 7.: Socle de connexion
- 8.: Moyens de chauffage
- 9.: Pièce de rétention
- 91.: Aimant de rétention

## Revendications

1. Mousseur (1) pour préparer de la mousse à partir d'une boisson comprenant du lait comportant:
- un récipient (2) destiné à recevoir la boisson,
- un agitateur (3) destiné à tourner à l'intérieur du récipient,
- un organe (6) sur lequel est monté l'agitateur (3),
- des moyens d'entraînement (5) agencés pour entraîner magnétiquement l'agitateur (3) en rotation,
- des moyens de rétention de l'agitateur (3) à l'intérieur du récipient (2),
**caractérisé en ce que** les moyens de rétention comportent au moins un aimant de rétention (91) fixe par rapport au récipient (2) en fonctionnement et agencés pour assurer magnétiquement la rétention de l'organe (6) à l'intérieur du récipient (2).

2. Mousseur (1) selon la revendication 1 dans iequei l'aimant de rétention (91) est solidaire du récipient et dans lequel les moyens de rétention comprennent une pièce en un matériau ferromagnétique solidaire de l'organe (6) et agencée de sorte que l'attraction magnétique que l'aimant de rétention (91) exerce sur ladite pièce assure la rétention de l'organe (6) à l'intérieur du récipient (2).

3. Mousseur (1) selon la revendication 1 dans lequel l'aimant de rétention (91) est solidaire de l'organe (6) et dans lequel les moyens de rétention comprennent une pièce en un matériau ferromagnétique solidaire du récipient (2) et agencé de sorte que l'attraction magnétique que l'aimant de rétention (91) exerce sur ladite pièce assure la rétention de l'organe (6) à l'intérieur du récipient (2).

4. Mousseur (1) selon la revendication 1 dans lequel l'aimant de rétention (91) est solidaire du récipient (2) et dans lequel les moyens de rétention comprennent un aimant secondaire de rétention (61) solidaire de l'organe (6) et agencé de sorte que l'attraction magnétique mutuelle entre l'aimant de rétention (91) et l'aimant secondaire de rétention (61) assure la rétention de l'organe (6) à l'intérieur du récipient (2).

5. Mousseur (1) selon la revendication 4 dans lequel les moyens d'entraînement comportent au moins un aimant moteur (51) permanent, et dans lequel l'aimant moteur (51) et l'aimant de rétention (91) sont disposés de sorte à assurer un auto centrage de l'organe (6) sur l'aimant de rétention (91).

6. Mousseur (1) selon la revendication précédente comprenant plusieurs aimants moteur (51) agencés pour tourner autour de l'aimant de rétention (91) et dans lequel les aimants moteur (51), l'aimant de rétention (91) et l'aimant secondaire de rétention (61) sont disposés de sorte que l'orientation de leurs pôles respectifs soit sensiblement colinéaire à la direction autour de laquelle l'agitateur (3) est destiné à tourner.

7. Mousseur selon la revendication précédente dans lequel les aimants moteur (51) présentent tous la même orientation magnétique et dans lequel l'aimant de rétention (91) présente une orientation magnétique inverse de celle des aimants moteur (51).

8. Mousseur (1) selon l'une quelconque des revendications précédentes, dans lequel l'organe (6) est un arbre ou un plot sur lequel l'agitateur (3) est solidaire en rotation.

9. Mousseur (1) selon l'une quelconque des revendications 1 à 7 dans lequel l'organe (6) comprend un axe sur lequel l'agitateur (3) est monté en rotation libre.

10. Mousseur (1) selon l'une quelconque des revendications précédentes comportant des moyens de retenue assurant la retenue amovible de l'agitateur (3) sur l'organe (6).

11. Mousseur selon la revendication précédente dans lequel les moyens de retenue sont agencés de sorte que la surface de contact entre l'agitateur (3) et l'organe (6) soit ponctuelle.

12. Mousseur (1) selon l'une quelconque des revendications précédentes comprenant un boîtier (4) à l'intérieur duquel sont logés les moyens d'entraînement (5), dans lequel le boîtier (4) est solidaire du récipient (2) et comprenant un socle (7) de connexion qui est amovible par rapport au boîtier (4) et qui est destiné à être connecté à une source d'alimentation électrique de sorte qu'une coopération entre le boîtier (4) et le socle (7) assure une connexion électrique des moyens d'entraînement (5) avec la source d'alimentation électrique.

## Claims

1. Frothing machine (1) for preparing foam from a drink containing milk comprising:
- a receptacle (2) for receiving the drink,
- a stirrer (3) for rotating inside the container,
- a body (6) on which is assembled stirrer (3),
- drive means (5) arranged to drive magnetic stirrer (3) in rotation,
- means for retaining stirrer (3) inside receptacle (2),
wherein the retaining means comprise at least one retention magnet (91) fixed relative to receptacle (2) when in use and arranged to ensure that body (6) is retained magnetically inside receptacle (2).

2. Frothing machine (1) according to claim 1 wherein retention magnet (91) is secured to the container and in which retention means include a part in a ferromagnetic material secured to body (6) and arranged so that the magnetic attraction that retention magnet (91) exerts on the said part ensures the retention of body (6) inside receptacle (2).

3. Frothing machine (1) according to claim 1 wherein retention magnet (91) is secured to body (6) and in which the retaining means include a part in ferromagnetic material attached to receptacle (2) and arranged so that the magnetic attraction of retention magnet (91) on said part ensures that body (6) is retained inside receptacle (2).

4. Frothing machine (1) according to claim 1 wherein retention magnet (91) is secured to receptacle (2) and in which the retention means include a secondary retention magnet (61) secured to body (6) and arranged so that the mutual magnetic attraction between retention magnet (91) and secondary retention magnet (61) ensures that body (6) is retained inside receptacle (2).

5. Frothing machine (1) according to claim 4 wherein the drive means include at least one permanent motor magnet (51), and in which motor magnet (51) and retention magnet (91) are arranged so as to ensure a self-centering of body (6) on retention magnet (91).

6. Frothing machine (1) according to the preceding claim comprising several motor magnets (51) arranged to rotate around retention magnet (91) and in which motor magnets (51), retention magnet (91) and secondary retention magnet (61) are arranged so that their respective poles are orientated substantially co-linear to the direction around which stirrer (3) is required to rotate.

7. Frothing machine according to the preceding claim in which motor magnets (51) all have the same magnetic orientation, and in which retention magnet (91) has a magnetic orientation opposite to that of motor magnets (51).

8. Frothing machine (1) according to any of the preceding claims, in which body (6) is a shaft or a stud on which stirrer (3) is secured in rotation.

9. Frothing machine (1) according to any one of claims 1 to 7 in which body (6) has a shaft on which stirrer (3) is fitted so as to rotate freely.

10. Frothing machine (1) according to any preceding claim comprising retaining means ensuring removable retaining of the stirrer on body (6).

11. Frothing machine according to the previous claim in which the retaining means are arranged so that there is a point contact between stirrer (3) and body (6).

12. Frothing machine (1) according to any preceding claim comprising a housing (4) within which are housed drive means (5), in which housing (4) is secured to receptacle (2) and including a base (7) which is removable relative to housing (4) and which is intended to be connected to a power source so that co-action between housing (4) and base (7) ensures the electrical connection of drive means (5) to the electricity supply.

## Patentansprüche

1. Schäumer (1) zum Herstellen von Schaum aus einem milchhaltigen Getränk, bestehend aus
- einem Behälter (2) zur Aufnahme des Getränks,
- einem im Innern des Behälters drehenden Rührer (3),
- einem Organ (6), an dem der Rührer (3) montiert ist,
- Antriebsmitteln (5), die so angeordnet sind, dass sie den Rührer (3) magnetisch in eine Drehbewegung versetzen,
- Vorrichtungen, die den Rührer (3) im Behälter (2) zurückhalten,
**gekennzeichnet dadurch, dass** die Rückhaltevorrichtungen mindestens einen Rückhaltemagneten (91) besitzen, der gegenüber dem Behälter (2) während des Betriebes ortsfest ist und so angeordnet, dass er das Organ (6) im Behälter (2) magnetisch zurückhält.

2. Schäumer (1) gemäss Patentantspruch 1, bei dem der Rückhaltemagnet (91) mit dem Behälter eine Baueinheit bildet, und bei dem die Rückhaltevorrichtungen ein ferromagnetisches, fest mit dem Organ (6) verbundenes Teil besitzen, das so angeordnet ist, dass die magnetische Anziehungskraft, die der Rückhaltemagnet (91) auf das genannte Teil ausübt, das Zurückhalten des Organs (6) im Behälter (2) sicherstellt.

3. Schäumer (1) gemäss Patentantspruch 1, bei dem der Rückhaltemagnet (91) fest mit dem Organ (6) verbunden ist, und bei dem die Rückhaltevorrichtungen ein ferromagnetisches, fest mit dem Behälter (2) verbundenes Teil besitzen, das so angeordnet ist, dass die magnetische Anziehungskraft, die der Rückhaltemagnet (91) auf das genannte Teil ausübt, das Zurückhalten des Organs (6) im Behälter (2) sicherstellt.

4. Schäumer (1) gemäss Patentantspruch 1, bei dem der Rückhaltemagnet (91) fest mit dem Behälter (2) verbunden ist, und bei dem die Rückhaltemittel einen zweiten Rückhaltemagneten (61) besitzen, der mit dem Organ (6) fest verbunden ist und so angeordnet, dass die magnetische Anziehungskraft, zwischen dem Rückhaltemagnet (91) und dem zweiten Rückhaltemagneten (61) das Zurückhalten des Organs (6) im Behälter (2) sicherstellt.

5. Schäumer (1) gemäss Patentanspruch 4, bei dem die Antriebsmittel mindestens einen Antriebs-Dauermagneten (51) besitzen und bei dem der Antriebsmagnet (51) und der Rückhaltemagnet (91) so angeordnet sind, dass eine Selbstzentrierung des Organs (6) über dem Rückhaltemagneten (91) gewährleistet ist.

6. Schäumer (1) gemäss dem vorstehenden Patentanspruch, bestehend aus mehreren Antriebsmagneten (51), die so angeordnet sind; dass sie um den Rückhaltemagneten (91) drehen, und bei dem die Antriebsmagnete (51), der Rückhaltemagnet (91) und der zweite Rückhaltemagnet (61) so angeordnet sind, dass ihre jeweiligen Pole annähernd kollinear mit der Richtung sind, um die sich der Rührer (3) drehen soll.

7. Schäumer gemäss vorstehendem Patentanspruch, bei dem alle Antriebsmagnete (51) die gleiche magnetische Orientierung besitzen und bei dem die magnetische Orientierung des Rückhaltemagneten (91) der der Antriebsmagnete(51) entgegengesetzt ist.

8. Schäumer (1) gemäss einem der vorstehenden Patentansprüche, bei dem das Organ (6) eine Welle oder ein Zapfen ist, mit dem der Rührer (3) drehbar verbunden ist.

9. Schäumer (1) gemäss einem der Patentansprüche 1 bis 7, bei dem das Organ (6) eine Achse besitzt, auf der der Rührer (3) frei drehbar montiert ist.

10. Schäumer (1) gemäss einem der vorstehenden Patentansprüche, der Rückhaltevorrichtungen besitzt, mit denen der Rührer (3) auf dem Organ (6) abnehmbar zurückgehalten wird.

11. Schäumer gemäss vorstehendem Patentanspruch, bei dem die Rückhaltevorrichtungen derart angeordnet sind, dass die Kontaktfläche zwischen Rührer (3) und Organ (6) punktförmig ist.

12. Schäumer (1) gemäss einem der vorstehenden Patentansprüche, bestehend aus einem Gehäuse (4), in dem Antriebsmittel (5) angeordnet sind, bei dem das Gehäuse (4) mit dem Behälter (2) fest verbunden ist und einen vom Gehäuse (4) abnehmbaren Fuss (7) zum Anschluss an eine elektrische Stromquelle besitzt, so dass durch das Zusammenwirken von Gehäuse (4) und Sockel (7) der elektrische Anschluss der Antriebsmittel (5) an die elektrische Stromquelle gewährleistet ist.
